# EUROPÄISCHE PATENTANMELDUNG

(11) **EP 3 451 269 A1**
(43) Veröffentlichungstag der Anmeldung: **06.03.2019**
(21) Anmeldenummer: 17189192.2
(22) Anmeldetag: 04.09.2017
(51) Int. Cl.: G06Q 30/06

(54) **VERFAHREN ZUR BESTIMMUNG EINES PASSENDEN ERSATZSANITÄRARTIKELS**

(71) Anmelder: Geberit International AG, 8645 Jona (CH)
(72) Erfinder: OBERHOLZER, Roland, 8610 Uster (CH); RAISSLE, Daniel, 8852 Altendorf (CH)
(74) Vertreter: Frischknecht, Harry Ralph

(57) **Zusammenfassung**

Ein Verfahren zur Bestimmung eines auf eine vorgegebene Einbausituation (E) passenden Ersatzsanitärartikels (U') für den Ersatz eines bisherigen Sanitärartikels (U) mittels eines Computers (1) mit mindestens einer Kamera (2), einem Prozessor (3) und einem Bildschirm (4), umfassend:
das Erfassen der vorgegebenen Einbausituation (E) mit dem bisherigen Sanitärartikel (U) durch die Kamera (2) des Computers (1);
das Bereitstellen von die Einbausituation (E) darstellenden Bilddaten durch den Prozessor (3),
das Anzeigen der Bilddaten auf dem Bildschirm (4) des Computers (1) als ein durch den Benutzer wahrnehmbares Bild,
das Erfassen von mindestens einer wirklichen Abmessung der Einbausituation (E) durch die Kamera (2),
das Auswählen eines in einer Datenbank gespeicherten Ersatzsanitärartikels (U'),
das Darstellen des ausgewählten Ersatzsanitärartikels (U') im besagten Bild, welche Darstellung den Ersatzsanitärartikel (U') auf die wirklichen Abmessungen der Einbausituation (E) im Wesentlichen massstabsgetreu skaliert wird, und
das Verschieben der Darstellung des Ersatzsanitärartikels (U') relativ zum Bild der Einbausituation (E), derart, dass die Passgenauigkeit zwischen der Einbausituation (E) und dem Ersatzsanitärartikel (U') überprüfbar ist.

## Beschreibung

### TECHNISCHES GEBIET

Die vorliegende Erfindung betrifft ein Verfahren zur Bestimmung eines auf eine vorgegebene Einbausituation passenden Ersatzsanitärartikels für den Ersatz eines bisherigen Sanitärartikels nach Anspruch 1, ein Computersystem nach Anspruch 14 und ein Computerprogrammprodukt nach Anspruch 15.

### STAND DER TECHNIK

Bei Renovationen oder Umbauten von sanitären Räumen, wie beispielsweise Badezimmern oder Toilettenanlagen, werden häufig Sanitärartikel durch neue ersetzt ohne dass es zu grösseren Änderungen oder Modifikationen an den Wänden kommt. Die Fliesen bleiben demnach unverändert an der Wand und der neu zu montierende Sanitärartikel sollte dabei mindestens gleich gross sein wie der zu ersetzende. Unter einem Sanitärartikel wird in diesem Zusammenhang beispielsweise ein Urinal, eine Klosettschüssel, eine Betätigungsplatte zur Auslösung einer Spülung, ein Lavabo, eine Badezimmermöbel, eine Dusch- oder Badewanne oder ähnliches verstanden.

Zu ähnlichen Problemen kommt es bei der Nachrüstung von bestehender Sanitärinfrastruktur, beispielsweise beim Nachrüsten eines Dusch-WC auf eine bestehende Klosettschüssel.

Bisher hat der Planer oder der Sanitärinstallateur ein zur Einbausituation passender Sanitärartikel durch Herausmessen und Auswählen aus einem Katalog ausgewählt. Dabei hat er aber keine weitere Unterstützung bezüglich der Passgenauigkeit erhalten und hat erst beim Einbau bemerkt, ob das ausgewählte Bauteil das passende war oder eben nicht.

### DARSTELLUNG DER ERFINDUNG

Ausgehend von der eingangs geschilderten Situation ist es eine Aufgabe der Erfindung, ein Hilfsmittel anzugeben, welches dem Planer oder dem Sanitärinstallateur die Wahl eines zur Einbausituation passenden Ersatzsanitärartikels vereinfacht und ihn insbesondere bezüglich der Passgenauigkeit in der bestehenden Einbausituation unterstützt.

Diese Aufgabe löst ein Verfahren nach Anspruch 1. Demgemäss dient ein Verfahren zur Bestimmung eines auf eine vorgegebene Einbausituation passenden Ersatzsanitärartikels für den Ersatz eines bisherigen Sanitärartikels mittels eines Computers mit mindestens einer Kamera, mindestens einem Prozessor und einem Bildschirm, umfassend:
das Erfassen der vorgegebenen Einbausituation mit dem bisherigen Sanitärartikel durch die Kamera des Computers;
das Bereitstellen von die Einbausituation darstellenden Bilddaten durch den Prozessor,
das Anzeigen der Bilddaten auf dem Bildschirm des Computers als ein durch den Benutzer wahrnehmbares Bild,
das Erfassen von mindestens einer wirklichen Abmessung der Einbausituation durch die Kamera oder durch den Benutzer,
das Auswählen eines in einer Datenbank gespeicherten Ersatzsanitärartikels,
das Darstellen des ausgewählten Ersatzsanitärartikels im besagten Bild, welche Darstellung den Ersatzsanitärartikel auf die wirklichen Abmessungen der Einbausituation im Wesentlichen massstabsgetreu skaliert wird, und
das Verschieben der Darstellung des Ersatzsanitärartikels relativ zum Bild der Einbausituation, derart, dass die Passgenauigkeit zwischen der Einbausituation und dem Ersatzsanitärartikel überprüfbar ist.

Das heisst mit anderen Worten, dass der Ersatzsanitärartikel auf dem Bildschirm in massstäblicher Relation zum bisherigen Sanitärartikel eingeblendet wird und der Benutzer die Passgenauigkeit auf dem Bildschirm durch Verschieben der Darstellung des Ersatzsanitärartikels im Bild feststellen kann. Durch diese Unterstützung kann der Benutzer einfach erkennen, ob der von ihm aus der Datenbank ausgewählte Ersatzsanitärartikel für die Einbausituation passt, was für ihn eine Hilfe darstellt und die Zahl der falsch ausgewählten Ersatzsanitärartikel reduziert.

Der Schritt der Erfassung der wirklichen Grösse und das anschliessende massstabsgetreue Einblenden des Ersatzsanitärartikels haben zudem den Vorteil, dass dem Benutzer eine künftige reale Einbausituation angezeigt wird.

Unter der Ausdrucksweise "Computer" wird ein Personal Computer, eine Notebook, ein Mobiltelefon, ein Tablet, ein Smartphone, eine Smartwatch oder ein ähnliches Gerät verstanden. Der Computer ist dabei derart konfiguriert, dass die beschriebenen Verfahrensschritte ausführbar sind.

Unter der Ausdrucksweise "Sanitärartikel" werden sämtliche in einem Sanitärraum zu platzierende Elemente, welche eine sanitäre Funktion erfüllen, verstanden. Insbesondere wird unter der Ausdrucksweise "Sanitärartikel" ein Urinal, eine Toilettenschüssel, ein Waschtisch, eine Trennwand, eine Betätigungsplatte, eine Sanitärarmatur und/oder ein Dusch-WC-Aufsatz verstanden.

Die Ausdrucksweise "Kamera" schliesst sämtliche optischen Elemente, wie optische Sensoren, CCD-Sensoren, etc. ein, welche der Erfassung eines Bildes dienen. Die Ausdrucksweise "Kamera" kann aber auch Laserscanner oder Infrarotkameras, etc. einschliessen. Die Kamera ist dabei derart konfiguriert, dass die beschriebenen Verfahrensschritte ausführbar sind.

Unter der Ausdrucksweise "Prozessor" wird ein Verarbeitungselement verstanden, welches derart konfiguriert ist, dass die beschriebenen Verfahrensschritte ausführbar sind.

Der Schritt der Erfassung der wirklichen Abmessung kann bevorzugt durch die Kamera selbst erfolgen oder der Benutzer gibt bevorzugt mindestens eine manuell gemessene Abmessung, wie beispielsweise die Höhe und/oder die Breite des zu ersetzenden Sanitärartikels ein.

Unter der Ausdrucksweise "Auswählen eines in einer Datenbank gespeicherten Ersatzsanitärartikels" wird verstanden, dass eine Darstellung oder eine Repräsentation des Ersatzsanitärartikels aus einer Datenbank ausgewählt wird. Vorzugsweise ist der Datensatz, der die Darstellung bzw. die Repräsentation enthält auch noch mit weiteren Informationen wie beispielsweise Artikelnummer, Abmessung, Farbe, etc. versehen.

In der Datenbank, aus welcher der Ersatzsanitärartikel ausgewählt wird, sind Datensätze von verschiedenen Ersatzsanitärartikeln gespeichert. Pro Ersatzsanitärartikel sind vorzugsweise dreidimensionale Daten, welche die Form betreffen, sowie Daten, welche die Grösse betreffen, abgespeichert. Die Datenbank ist in einem Speicher gespeichert, der mit dem Computer in Verbindung steht. Der Speicher kann in einem Netzwerk, mit dem der Computer in Verbindung steht angeordnet sein oder er kann im Computer integriert sein.

Vorzugsweise wird durch die Kamera die wirkliche Raumlage der Einbausituation erfasst und die Darstellung des Ersatzsanitärartikels wird im besagten Bild auf die wirkliche Raumlage der Einbausituation lagerichtig ausgerichtet. Hierdurch ergeht der Vorteil, dass der Benutzer die Einbausituation auch aus einem schrägen Winkel und nicht nur frontal auf den zu ersetzenden Sanitärartikel erfassen kann. Dies ist gerade bei engen Platzverhältnissen, wie sie in manchen Sanitärräumen vorhanden sind, von Vorteil.

In einer ersten Variante erfolgt das Auswählen des Ersatzsanitärartikels aus der Datenbank vorzugsweise durch den Prozessor. Das heisst es wird durch den Prozessor aus der Datenbank der Ersatzsanitärartikel derjenige Ersatzsanitärartikel ausgewählt, welcher am genauesten über den zu ersetzenden Sanitärartikel passt. Hierbei werden die in der Datenbank gespeicherten Ersatzsanitärartikel mit der Einbausituation abgeglichen.

In einer zweiten Variante erfolgt das Auswählen des Ersatzsanitärartikels aus der Datenbank vorzugsweise durch den Prozessor sowie durch den Benutzer. Das heisst es werden durch den Prozessor aus der Datenbank der Ersatzsanitärartikel mehrere mögliche Ersatzsanitärartikel ausgewählt, welche über den zu ersetzenden Sanitärartikel passen, wobei dem Benutzer dann eine mögliche Auswahl angezeigt wird und der Benutzer dann einen der Ersatzsanitärartikel aus der Auswahl auswählt. Bei der Bereitstellung der Auswahl werden die in der Datenbank gespeicherten Ersatzsanitärartikel mit der Einbausituation abgeglichen.

In einer dritten Variante erfolgt das Auswählen des Ersatzsanitärartikels aus der Datenbank vorzugsweise ausschliesslich durch den Benutzer. Das heisst, der Benutzer wählt aus eingeblendeten Ersatzsanitärartikeln aus.

Vorzugsweise werden bei einer Veränderung der Lage der Kamera bezüglich der Einbausituation die Bilddaten und die Darstellung des Ersatzsanitärartikels kontinuierlich aktualisiert. Das heisst dem Benutzer wird bei einer Bewegung der Kamera im Raum eine aktualisierte Ansicht der Einbausituation angezeigt und er kann den eingeblendeten Ersatzsanitärartikel von verschiedenen Seiten betrachten. Diese Ausführung hat den Vorteil, dass die Einbausituation auch von einer Ansicht schräg auf die Anordnung sehr gut überprüfbar wird.

Alternativ werden die Bilddaten einmalig als statisches Bild erfasst und anschliessend verfahrensgemäss verarbeitet. Hierdurch kann der Benutzer die Einbausituation als Foto erfassen und die Auswahl des in der Datenbank gespeicherten Ersatzsanitärartikels erst später treffen. Diese Ausführung hat den Vorteil, dass die Auswahl des Ersatzsanitärartikels nicht vor Ort erfolgen muss, sondern im Rahmen der weitergehenden Planung.

Vorzugsweise wird, falls der eingeblendete Ersatzsanitärartikel für die Einbausituation nicht passend ist, eine anderer Ersatzsanitärartikels ausgewählt, wobei dann der im Bild eingeblendete nicht passende Ersatzsanitärartikel aus dem Bild ausgeblendet wird und die Darstellung des anderen Ersatzsanitärartikels eingeblendet wird.

Vorzugsweise wird nach Bestätigung der Auswahl des Ersatzsanitärartikels ein Set von Planungsdaten ausgegeben. Das Set von Planungsdaten umfasst mindestens Daten bezüglich des Typs des ausgewählten Ersatzsanitärartikels. Weiter kann das Set von Datenbank Einbauhinweise oder eine Stückliste von weiteren benötigten Bauelementen oder Abmessungen der wirklichen Einbausituation umfassen.

In einer ersten Variante erfolgt die Bestätigung der Auswahl des Ersatzsanitärartikels durch den Benutzer. Das heisst, der Benutzer bestätigt den ausgewählten Sanitärartikel. Vor der Bestätigung wird der Benutzer anhand des im Bild angezeigten zu ersetzenden Sanitärartikel und des im Bild angezeigten Ersatzsanitärartikel die Passung visuell überprüfen können, wobei die Umrisse des Ersatzsanitärartikels grösser sein sollten als die Umrisse des zu ersetzenden Sanitärartikels. Für die Bestätigung wählt er beispielsweise einen Betätigungsbutton an, der auf dem Bildschirm angezeigt wird.

In einer zweiten Variante erfolgt die Bestätigung der Auswahl des Ersatzsanitärartikels durch den Prozessor, wenn der Ersatzsanitärartikel für die Einbausituation passend ist. Es wird dabei in einem Überprüfungsschritt geprüft, ob die Umrisse des Ersatzsanitärartikels grösser sind als die Umrisse des zu ersetzenden Sanitärartikels.

Vorzugsweise wird nach dem Auswählen des Ersatzsanitärartikels aus der Datenbank im Bild mindestens eine für die Positionierung des Ersatzsanitärartikels relevante Abmessung bestimmt und eingeblendet. Die Bestimmung der relevanten Abmessung erfolgt anhand der Positionierung des Ersatzsanitärartikels im Bild. Besonders bevorzugt handelt es sich bei der besagten relevanten Abmessung um eine Abmessung, welche für den Gebrauch des Ersatzsanitärartikels von Wichtigkeit ist.

Beispielsweise wird bei einem Urinal die sogenannte Schnabelhöhe eingeblendet. Die Schnabelhöhe ist dabei das Mass eines vorderen Bereiches des Urinals, zu welchem Bereich der Benutzer herantritt. Sofern die Schnabelhöhe zu hoch ist, ist es für einen Benutzer aus technischen Gründen nicht mehr möglich das Urinal zu benützen. Bei einem Waschtisch wird beispielsweise die Höhe des Waschtisches eingeblendet.

Besonders bevorzugt wird die bestimmte Abmessung mit einem in einer Datenbank gespeicherten Normabmessungsbereich für die relevante Abmessung verglichen. Anschliessend wird eine positive Nachricht eingeblendet, wenn die bestimmte Abmessung im Normabmessungsbereich liegt oder es wird eine negative Nachricht eingeblendet, wenn die bestimmte Abmessung ausserhalb des Normabmessungsbereichs liegt.

Vorzugsweise ist die Darstellung des Ersatzsanitärartikel unterschiedlich zur Darstellung des Sanitärartikels. Dies erlaubt dem Benutzer eine einfache Unterscheidung zwischen dem Ersatzsanitärartikel und dem zu ersetzenden Sanitärartikel. Beispielsweise kann der Ersatzsanitärartikel als vollflächiges Rendering oder als Gitternetz oder leicht transparent eingeblendet werden.

Vorzugsweise wird in einem Schritt der Überprüfung die Passgenauigkeit zwischen einem bisherigen Sanitärartikel und dem Ersatzsanitärartikel überprüft und dem Benutzer das Resultat der Überprüfung angezeigt. Die Anzeige an den Benutzer kann durch eine entsprechende Einblendung auf dem Bildschirm erfolgen.

In einer ersten Variante erfolgt die Erfassung der wirklichen Abmessung durch die Kamera basierend auf einem in der Einbausituation platzierten Referenzobjekt. Das Referenzobjekt wird typischerweise vor der Erfassung der wirklichen Abmessung das Referenzobjekt in der Einbausituation platziert.

Das Referenzobjekt kann beispielsweise ein Aufkleber mit einem Code, wie einem QR-Code sein. Der Sticker wird dann in der Einbausituation befestigt und durch die Kamera erfasst. Alternativ kann das Referenzobjekt ein in die Einbausituation gelegter Massstab mit wirklichen Abmessungen sein. Beispielsweise ein Teil eines Klappmeters.

In einer zweiten Variante erfolgt die Erfassung der wirklichen Abmessung durch die Kamera basierend auf dem in der Einbausituation montierten Sanitärartikel oder einem anderen in der Einbausituation montierten Sanitärbauteil, wobei hierzu ein Abgleich des erfassten Sanitärartikels bzw. Sanitärbauteils und von in einer Datenbank abgespeicherten Daten erfolgt. Das heisst mit anderen Worten, dass die erfasste Einbausituation durch den Prozessor auf in der Datenbank gespeicherte Daten abgeglichen wird und bei Erkennen eines gespeicherten Sanitärartikels bzw. Sanitärbauteils die wirkliche Abmessung bestimmt wird.

In einer Variante der Erfassung der wirklichen Abmessung durch den Benutzer kann der Benutzer mindestens eine wirkliche Abmessung, die er beispielsweise in der Einbausituation gemessen hat, in einen Dialog eingeben. Die wirkliche Abmessung wird dann anhand der Eingabe in den Dialog weiterverarbeitet.

Vorzugsweise werden die Bilddaten als Videostream erfasst und es werden die Bilddaten auf dem Bildschirm während der Ausführung von allen Schritten angezeigt. Hierdurch kann der Benutzer die Kamera im Raum bewegen und das Bild wird entsprechend nachgeführt. Alternativerweise werden die Bilddaten als Standbild erfasst.

Vorzugsweise werden vor dem Auswählen eines in einer Datenbank gespeicherten Ersatzsanitärartikels verschiedene Parameter der Einbausituation abgefragt, wobei aufgrund der angegebenen Parameter die Auswählmöglichkeit aus der Datenbank mit den Ersatzsanitärartikels eingeschränkt wird.

Die Abfrage kann dabei automatisiert erfolgen, indem eine der oben genannten relevanten Abmessungen abgefragt wird und/oder indem die Ausdehnung des zu ersetzenden Sanitärartikels erfasst wird. Alternativerweise ist es auch denkbar, dass der Benutzer gewisse Angaben eingeben muss.

Ein Computersystem zur Bestimmung eines auf eine vorgegebene Einbausituation passenden Ersatzsanitärartikels für den Ersatz eines bisherigen Sanitärartikels mit mindestens einer Kamera, mindestens einem Prozessor und einem Bildschirm, wobei
die Kamera derart konfiguriert ist, dass die vorgegebene Einbausituation mit dem bisherigen Sanitärartikel erfassbar ist;
der Prozessor derart konfiguriert ist, dass Bilddaten bereitstellbar sind, die die Einbausituation darstellen,
der Bildschirm derart konfiguriert ist, dass die Bilddaten als ein durch den Benutzer wahrnehmbares Bild anzeigbar sind,
die Kamera derart konfiguriert ist, dass wirkliche Abmessungen der Einbausituation erfassbar sind; oder das Verfahren derart konfiguriert ist, dass wirkliche Abmessungen der Einbausituation eingebbar sind,
die Datenbank derart konfiguriert ist, dass ein in einer Datenbank gespeicherter Ersatzsanitärartikels aus der Datenbank auswählbar ist,
der ausgewählte Ersatzsanitärartikel im besagten Bild darstellbar ist, welche Darstellung den Ersatzsanitärartikel auf die wirklichen Abmessungen der Einbausituation im Wesentlichen massstabsgetreu skaliert, und
die Darstellung des Ersatzsanitärartikels relativ zum Bild der Einbausituation verschiebbar ist, derart, dass die Passgenauigkeit zwischen der Einbausituation und dem Ersatzsanitärartikel überprüfbar ist.

Ein Computerprogrammprodukt umfassend: ein computerlesbares Medium mit darin enthaltenen Computerprogrammcodemitteln zur Steuerung eines oder mehrerer Prozessoren eines Computers, welcher Computer mindestens eine Kamera, einen Prozessor und einen Bildschirm umfasst, wobei das Computerprogrammcodemittel zur Ausübung eines Verfahren zur Bestimmung eines auf eine vorgegebene Einbausituation passenden Ersatzsanitärartikels für den Ersatz eines bisherigen Sanitärartikels nach dem oben beschriebenen Verfahren ausgebildet ist.

Das Computerprogrammprodukt kann beispielsweise als Applikation bzw. als App auf einem Computer, insbesondere der oben genannten Art, installiert sein.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Ansicht eines Schrittes eines Verfahren zur Bestimmung eines auf eine vorgegebene Einbausituation passenden Ersatzsanitärartikels für den Ersatz eines bisherigen Sanitärartikels;
- Fig. 2: eine weitere Ansicht der Figur 1;
- Fig. 3: eine weitere Ansicht der Figur 1;
- Fig. 4: eine weitere Ansicht der Figur 1;
- Fig. 5: eine schematische Ansicht eines Bildschirm während des Verfahrens; und
- Fig. 6: eine weitere schematische Ansicht.

### BESCHREIBUNG BEVORZUGTER AUSFÜHRUNGSFORMEN

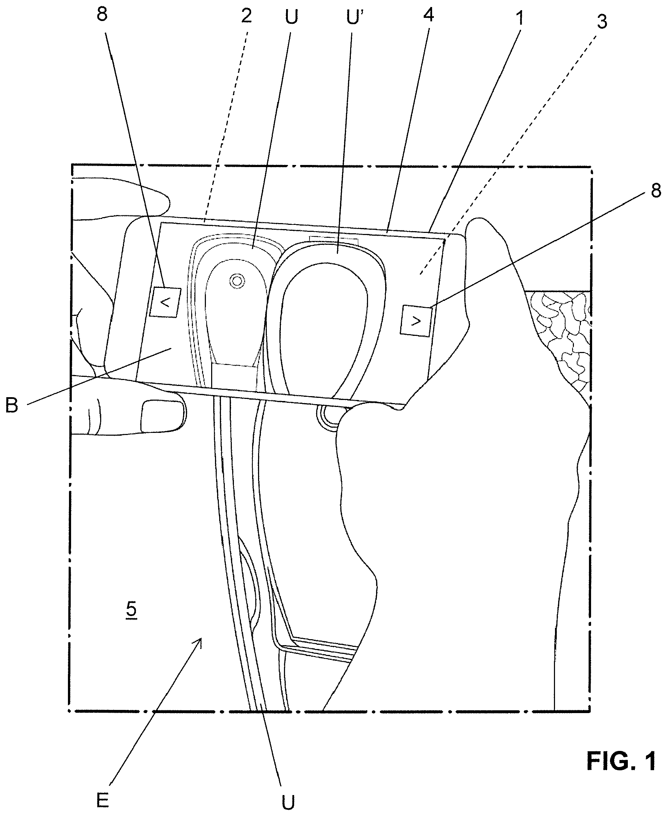

Anhand der Figuren 1 bis 4 wird eine Ausführungsform des erfindungsgemässen Verfahrens genauer erläutert. Das Verfahren dient zur Bestimmung eines auf eine vorgegebene Einbausituation E passenden Ersatzsanitärartikel U' für den Ersatz eines bisherigen Sanitärartikels U, der in der Einbausituation E montiert ist. Insbesondere dient das erfindungsgemässe Verfahren der Bestimmung eines Ersatzsanitärartikels U', welcher auf die vorgegebene Einbausituation passt.

Der zu ersetzende Sanitärartikel U bzw. der Ersatzsanitärartikel U' kann beispielsweise eine Sanitärkeramik, wie ein Urinal, eine Toilettenschüssel, eine Badewanne oder ein Waschtisch sein. Dabei ist es wichtig, dass der Ersatzsanitärartikel U' für die Einbausituation passend ist. Insbesondere bezüglich der Umrisse, derjenigen Bereiche, welche an der Wand montiert sind, so dass an der Einbausituation keine wesentlichen Renovation, beispielsweise im Sinne einer Anpassung der Fliesen kommt. Es ist typischerweise wichtig, dass der Ersatzsanitärartikel U' gerade bei sanften Renovationen die Umrisse des bisherigen Sanitärartikel U an der Wand 5 der Einbausituation E überdeckt.

In einem weiteren Beispiel ist der ersetzende Sanitärartikel U bzw. der Ersatzsanitärartikel U' beispielsweise ein Dusch-WC-Aufsatz, der einen bestehenden Dusch-WC-Aufsatz oder einen Toilettensitzring ersetzen soll. Hier ist die Passung bei den von der Klossettschüssel vorgegebener Einbausituation von Wichtigkeit, so dass der Dusch-WC-Aufsatz auf die bestehende Klosettschüssel passt.

Für die Durchführung des Verfahrens wird ein Computer 1 mit mindestens einer Kamera 2, mit einem Prozessor 3 und mit einem Bildschirm 4 eingesetzt. In der gezeigten Ausführungsform ist der Computer 1 in der Gestalt eines Smartphones bzw. eines Mobiltelefons dargestellt. Es können auch andere Arten von Geräten wie Tablets oder Personal Computers oder andere smarte Geräte eingesetzt werden.

In einem ersten Schritt, welcher in der Figur 1 gezeigt wird, wird die vorgegebene Einbausituation E mit dem bisherigen Sanitärartikel U durch die Kamera 2 des Computers 1 erfasst. Der bisherige Sanitärartikel U ist der Sanitärartikel, welcher durch den Ersatzsanitärartikel U' ersetzt werden muss.

Nach dem Erfassen der vorgegebenen Einbausituation E werden Bilddaten durch den Prozessor 3 bereitgestellt. Die Bilddaten werden durch den Prozessor 3 verarbeitet und stellen die Einbausituation E dar.

In einem weiteren Schritt werden dann die Bilddaten auf den Bildschirm 4 des Computers 1 als ein durch den Benutzer wahrnehmbares Bild B dargestellt. Dies kann von den Figuren 1 bis 4 gut erkannt werden. Dort wird die Einbausituation E auf dem Bildschirm 4 des Computers dargestellt.

Weiter wird durch die Kamera 2 mindestens eine wirkliche Abmessung der Einbausituation E erfasst. Dieser Schritt kann während des Erfassens der Einbausituation erfolgen. Eine spätere Erfassung nach Erfassung der Einbausituation ist auch denkbar. Unter einer wirklichen Abmessung wird eine reale in der Einbausituation bestehende Abmessung verstanden, so dass die Einbausituation durch den Prozessor massstäblich weiter verarbeitet werden kann.

Anschliessend wird aus einer Datenbank ein in der Datenbank gespeicherter Ersatzsanitärartikel U' ausgewählt. Dabei wird der Ersatzsanitärartikel U' im besagten Bild B dargestellt, wobei die Darstellung des Ersatzsanitärartikels U' durch den Prozessor auf die wirklichen Abmessungen der Einbausituation E im Wesentlichen massstabgetreu skaliert wird. Das heisst, der Benutzer hat eine direkte Rückmeldung bezüglich der Passgenauigkeit weil der ausgewählte Ersatzsanitärartikel U' in der bezüglich der Einbausituation E richtigen Grösse im Bild dargestellt wird.

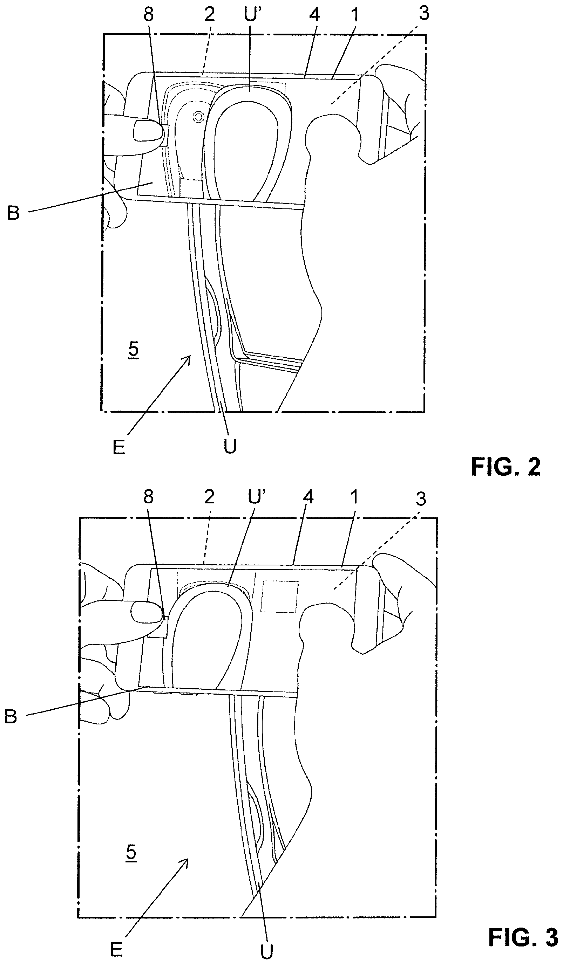

Als weiterer Schritt folgt dann das Verschieben der Darstellung des Ersatzsanitärartikels U' relativ zum Bild der Einbausituation E. Das Verschieben wird von den Figur 1 bis 4 dargestellt. In den Figuren 2 bis 3 betätigt der Benutzer entsprechende Pfeiltasten 8, derart dass die Darstellung des Ersatzsanitärartikel U' relativ zum Bild der Einbausituation E verschiebbar ist.

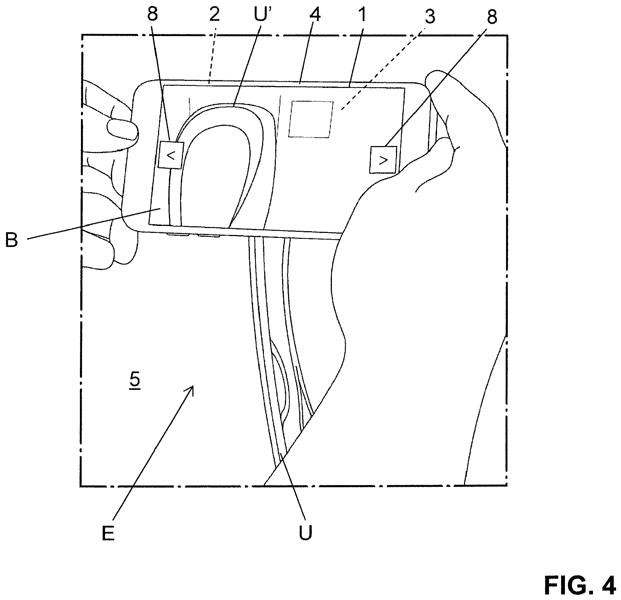

In der Figur 4 überlagert die Darstellung des Ersatzsanitärartikels U' den zu ersetzenden Sanitärartikel U. Anhand dieser Darstellung kann der Benutzer dann die Passgenauigkeit zwischen der Einbausituation E und dem Ersatzsanitärartikel U' überprüfen. Würde der zu ersetzende Sanitärartikel U im Bereich der Wand 5 seitlich zum Ersatzsanitärartikel U' herausragen, so wäre der Ersatzsanitärartikel U' nicht passend. Die in der Figur 4 gezeigte Darstellung zeigt, dass der Ersatzsanitärartikel U' den zu ersetzenden bisherigen Sanitärartikel U vollständig überlagert, was dem Benutzer zeigt, dass der ausgewählte Ersatzsanitärartikel U' für die Einbausituation E passend ausgebildet ist.

Nach der Durchführung des Verfahrens ist es dem Benutzer möglich ein auf die Einbausituation E passender Sanitärartikel zu bestellen.

Vorzugsweise wird nicht nur mindestens eine wirkliche Abmessung der Einbausituation E durch die Kamera 2 erfasst, sondern auch die wirkliche Raumlage der Einbausituation E relativ zur Kamera im Raum. Für die Darstellung des Ersatzsanitärartikels U' im besagten Bild heisst dies, dass die Darstellung des Ersatzsanitärartikels U' im besagten Bild auf die wirkliche Raumlage der Einbausituation E lagerichtig eingeblendet wird oder eine optimale Platzierung einblendet oder vorschlägt.

Das Auswählen des Ersatzsanitärartikels U' aus der Datenbank kann in einer ersten Variante durch den Prozessor 3 erfolgen. Das heisst, der Prozessor 3 berechnet anhand der aufgenommenen Einbausituation E den passenden Ersatzsanitärartikel U' und wählt diesen aus.

Alternativ kann in einer zweiten Variante die Auswahl des Ersatzsanitärartikels U' aus der Datenbank durch den Prozessor 3 sowie durch den Benutzer erfolgen. Dabei wählt der Prozessor basierend auf der aufgenommenen Einbausituation E eine Auswahl an passenden Ersatzsanitärartikel U' aus und stellt diese dem Benutzer zur Auswahl.

In einer dritten Variante erfolgt die Auswahl des Ersatzsanitärartikels U' aus der Datenbank ausschliesslich durch den Benutzer.

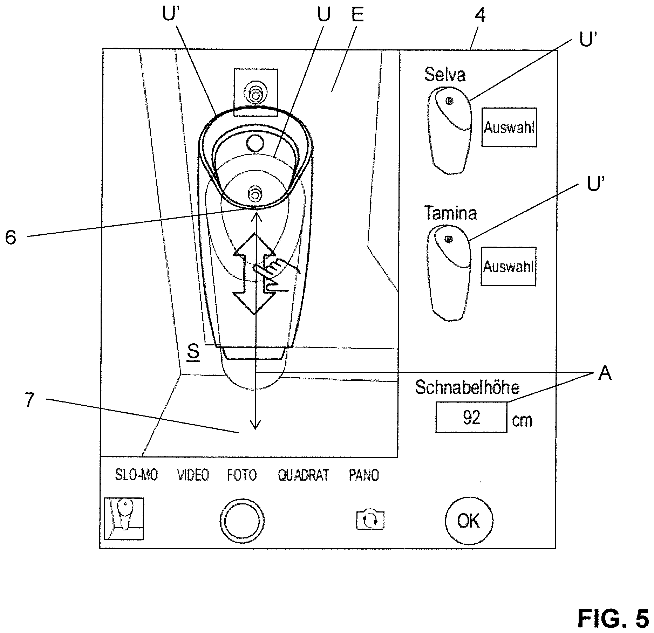

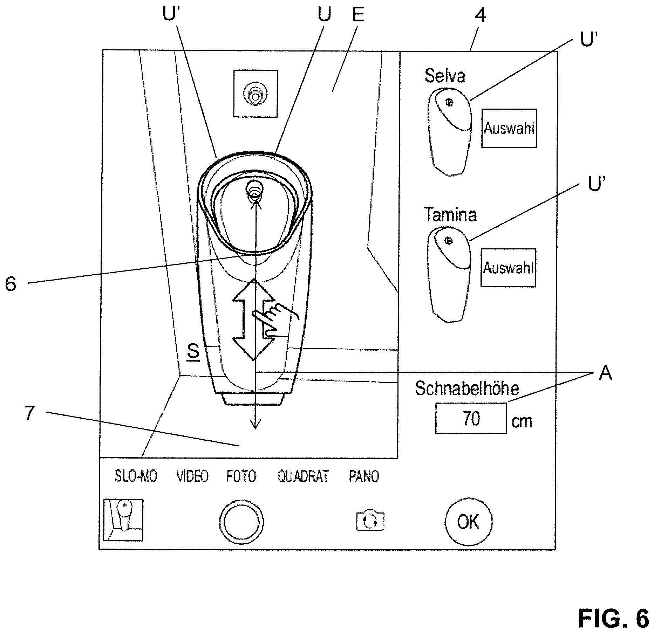

In der Bildschirmdarstellung der Figuren 5 und 6 werden zwei mögliche Ersatzsanitärartikel U' dargestellt. Die Ersatzsanitärartikel U' tragen die Bezeichnung "Selva" und "Tamina". Der Benutzer kann dann die beiden Sanitärartikel durch das Auswählen des Knopfes "Auswahl" auswählen und dann wird der entsprechende Ersatzsanitärartikel U' im Bild dargestellt. Der Ersatzsanitärartikel U' kann dann relativ zur aufgenommenen Einbausituation E verschoben werden.

Bei einer Veränderung der Lage der mindestens einen Kamera 2 bezüglich der Einbausituation E werden die Bilddaten und die Darstellung des Ersatzsanitärartikels U' vorzugsweise kontinuierlich aktualisiert. Das heisst, die Kamera 2 nimmt im Wesentlichen einen Videostream der Einbausituation E auf und aktualisiert somit die Bilddaten in vorbestimmten Intervallen, wobei bei einer Veränderung der Lage der mindestens einen Kamera 2 bezüglich der Einbausituation E die Darstellung des Ersatzsanitärartikels U' gleichermassen aktualisiert wird.

In einer anderen Variante wäre es auch denkbar, dass die Bilddaten als statisches Bild erfasst werden und anschliessend nach dem Verfahren verarbeitet werden. Diese Variante hat den Vorteil, dass sie weniger Rechenleistung des Prozessor erfordert.

Vorzugsweise wird nach Bestätigen der Auswahl des Ersatzsanitärartikels U', also dann wenn ein entsprechender Ersatzsanitärartikel U' ausgewählt wurde, ein Set von Planungsdaten ausgegeben. Das Set vom Planungsdaten umfasst mindestens Daten bezüglich des Typs des Ersatzsanitärartikels U'. Mit dem Set von Planungsdaten wird es dem Benutzer erlaubt, ein entsprechender Ersatzsanitärartikels U' zu bestellen.

Das Set von Planungsdaten kann weiterhin zusätzliche Daten bezüglich weiterer für den Einbau des Ersatzsanitärartikels U' benötigten Materialien wie Anschlussstutzen, Siphons, Dichtungsbänder, Befestigungsmaterial, etc. und/oder eine Montageanleitung und/oder Montagemasse, wie eine Befestigungshöhe, umfassen.

In einer ersten Variante erfolgt die Bestätigung der Auswahl des Ersatzsanitärartikels U' durch den Benutzer selbst. Der Benutzer macht dabei eine visuelle Kontrolle, ob die Umrisse des Ersatzsanitärartikels U' auf der Wand 5 grösser sind als diejenigen des zu ersetzenden Sanitärartikels. Anschliessend kann der Benutzer beispielsweise den Button mit der Bezeichnung "OK" nach den Figuren 5 und 6 wählen.

Alternativerweise könnte in einer zweiten Variante die Bestätigung der Auswahl des Ersatzsanitärartikels U' auch durch den Prozessor erfolgen, wenn der Ersatzsanitärartikel U' für die Einbausituation E passend ist.

Von den Figuren 5 und 6 wird gezeigt, dass in einer besonders bevorzugten Ausführungsform nach dem Auswählen des Ersatzsanitärartikels U' aus der Datenbank im Bild mindestens eine für die Positionierung des Ersatzsanitärartikels U' relevante Abmessung A bestimmt und eingeblendet wird. In der gezeigten Ausführungsform wird die sogenannte Schnabelhöhe dargestellt. Die Schnabelhöhe ist dabei das Mass der vorderen Kante 6 des gezeigten Ersatzsanitärartikels U' vom Boden 7 her gesehen. Ist die Schnabelhöhe zu gross, wäre eine Benützung des Sanitärartikels nicht mehr möglich.

Die Erfassung der wirklichen Abmessung der Einbausituation E kann basierend auf einem in der Einbausituation E platzierten Referenzobjekt erfolgen. Beispielsweise ist es denkbar, dass in der Einbausituation E ein Kleber mit entsprechenden Abmessungsdaten befestigt wird. Ein derartiger Sticker kann beispielsweise ein QR-Code sein, dessen Abmessung erfasst werden kann. Alternativerweise kann der Benutzer ein Klappmeter bzw. ein Meterstab in der Einbausituation platzieren, wobei dann die Einteilung auf dem Klappmeter bzw. auf dem Meterstab erfasst wird.

Alternativerweise kann die Erfassung der wirklichen Abmessung basierend auf dem in der Einbausituation montierten Sanitärartikel U oder einem anderen in der Einbausituation E montierten Sanitärbauteil erfolgen, wobei bei beiden Varianten ein Abgleich des erfassten Sanitärartikel U bzw. des Sanitärbauteils mit von in einer Datenbank abgespeicherten Daten erfolgt. Anhand von diesem Abgleich kann dann ein entsprechendes Mass festgestellt werden.

### BEZUGSZEICHENLISTE

- 1: Computer
- 2: Kamera
- 3: Prozessor
- 4: Bildschirm
- 5: Wand
- 6: vordere Kante
- 7: Boden
- 8: Pfeiltasten

- A: Abmessung
- B: vom Benutzer wahrnehmbares Bild
- E: Einbausituation
- U: bisheriger Sanitärartikel
- U': Ersatzsanitärartikel

## Patentansprüche

1. Verfahren zur Bestimmung eines auf eine vorgegebene Einbausituation (E) passenden Ersatzsanitärartikels (U') für den Ersatz eines bisherigen Sanitärartikels (U) mittels eines Computers (1) mit mindestens einer Kamera (2), mindestens einem Prozessor (3) und einem Bildschirm (4), umfassend:
das Erfassen der vorgegebenen Einbausituation (E) mit dem bisherigen Sanitärartikel (U) durch die Kamera (2) des Computers (1);
das Bereitstellen von die Einbausituation (E) darstellenden Bilddaten durch den Prozessor (3),
das Anzeigen der Bilddaten auf dem Bildschirm (4) des Computers (1) als ein durch den Benutzer wahrnehmbares Bild (B),
das Erfassen von mindestens einer wirklichen Abmessung der Einbausituation (E) durch die Kamera (2) oder durch den Benutzer,
das Auswählen eines in einer Datenbank gespeicherten Ersatzsanitärartikels (U'),
das Darstellen des ausgewählten Ersatzsanitärartikels (U') im besagten Bild, welche Darstellung den Ersatzsanitärartikel (U') auf die wirklichen Abmessungen der Einbausituation (E) im Wesentlichen massstabsgetreu skaliert wird, und
das Verschieben der Darstellung des Ersatzsanitärartikels (U') relativ zum Bild der Einbausituation (E), derart, dass die Passgenauigkeit zwischen der Einbausituation (E) und dem Ersatzsanitärartikel (U') überprüfbar ist.

2. Verfahren nach Anspruch 1, **dadurch gekennzeichnet, dass** die wirkliche Raumlage der Einbausituation durch die Kamera (2) erfasst wird und dass die Darstellung des Ersatzsanitärartikels (U') im besagten Bild (B) auf die wirkliche Raumlage der Einbausituation (E) lagerichtig ausgerichtet wird.

3. Verfahren nach Anspruch 1 oder 2, **dadurch gekennzeichnet, dass** das Auswählen des Ersatzsanitärartikels (U') aus der Datenbank durch den Prozessor (3) oder durch den Prozessor (3) sowie durch den Benutzer oder ausschliesslich durch den Benutzer erfolgt.

4. Verfahren nach einem der vorhergehenden Ansprüche, **dadurch gekennzeichnet,**
**dass** bei einer Veränderung der Lage der Kamera (2) bezüglich der Einbausituation (E) die Bilddaten und die Darstellung des Ersatzsanitärartikels (U') kontinuierlich aktualisiert werden; oder
**dass** die Bilddaten einmalig als statisches Bild erfasst werden und anschliessend verarbeitet werden.

5. Verfahren nach einem der vorhergehenden Ansprüche, **dadurch gekennzeichnet, dass** falls der eingeblendete Ersatzsanitärartikel (U') für die Einbausituation (E) nicht passend ist, eine anderer Ersatzsanitärartikels ausgewählt wird, wobei dann der im Bild (B) eingeblendete nicht passende Ersatzsanitärartikel aus dem Bild (B) ausgeblendet wird und die Darstellung des anderen Ersatzsanitärartikels eingeblendet wird.

6. Verfahren nach einem der vorhergehenden Ansprüche, **dadurch gekennzeichnet, dass** nach Bestätigung der Auswahl des Ersatzsanitärartikels (U') ein Set von Planungsdaten umfassend mindestens Daten bezüglich des Typs des Ersatzsanitärartikels (U') ausgegeben wird.

7. Verfahren nach Anspruch 6, **dadurch gekennzeichnet,**
**dass** die Bestätigung der Auswahl des Ersatzsanitärartikels (U') durch den Benutzer erfolgt; oder
**dass** die Bestätigung der Auswahl des Ersatzsanitärartikels (U') durch den Prozessor erfolgt, wenn der Ersatzsanitärartikel (U') für die Einbausituation (E) passend ist.

8. Verfahren nach einem der vorhergehenden Ansprüche, **dadurch gekennzeichnet, dass** nach dem Auswählen des Ersatzsanitärartikels (U') aus der Datenbank im Bild (B) mindestens eine für die Positionierung des Ersatzsanitärartikels (U') relevante Abmessung (A) bestimmt und eingeblendet wird.

9. Verfahren nach Anspruch 8, **dadurch gekennzeichnet, dass** die bestimmte Abmessung (A) mit einem in einer Datenbank gespeicherten Normabmessungsbereich für die relevante Abmessung verglichen wird, wobei eine positive Nachricht eingeblendet wird, wenn die bestimmte Abmessung im Normabmessungsbereich liegt und wobei eine negative Nachricht eingeblendet wird, wenn die bestimmte Abmessung ausserhalb des Normabmessungsbereichs liegt.

10. Verfahren nach einem der vorhergehenden Ansprüche, **dadurch gekennzeichnet,**
**dass** die Darstellung des Ersatzsanitärartikel (U') unterschiedlich zur Darstellung des Sanitärartikels (U) ist und/oder
**dass** in einem Schritt der Überprüfung die Passgenauigkeit zwischen einem bisherigen Sanitärartikel (U) und dem Ersatzsanitärartikel (U') überprüft wird und dem Benutzer das Resultat der Überprüfung angezeigt wird.

11. Verfahren nach einem der vorhergehenden Ansprüche, **dadurch gekennzeichnet,**
**dass** bei der Erfassung der wirklichen Abmessung durch den Benutzer, der Benutzer mindestens eine wirkliche Abmessung in einen Dialog eingeben kann;
**dass** die Erfassung der wirklichen Abmessung durch die Kamera basierend auf einem in der Einbausituation platzierten Referenzobjekt erfolgt; und/oder
**dass** die Erfassung der wirklichen Abmessung durch die Kamera basierend auf dem in der Einbausituation montierten Sanitärartikel (U) oder einem anderen in der Einbausituation montierten Sanitärbauteils erfolgt, wobei hierzu ein Abgleich des erfassten Sanitärartikels (U) bzw. Sanitärbauteils mit von in einer Datenbank abgespeicherten Daten erfolgt.

12. Verfahren nach einem der vorhergehenden Ansprüche, **dadurch gekennzeichnet, dass** die Bilddaten als Videostream erfasst werden und dass die Bilddaten auf dem Bildschirm (4) während der Ausführung von allen Schritten angezeigt werden.

13. Verfahren nach einem der vorhergehenden Ansprüche, **dadurch gekennzeichnet, dass** vor dem Auswählen eines in einer Datenbank gespeicherten Ersatzsanitärartikels (U') mindestens Parameter der Einbausituation (E) abgefragt wird, wobei aufgrund der angegebenen Parameter die Auswählmöglichkeit aus der Datenbank mit den Ersatzsanitärartikels (U') eingeschränkt wird.

14. Computersystem zur Bestimmung eines auf eine vorgegebene Einbausituation (E) passenden Ersatzsanitärartikels (U') für den Ersatz eines bisherigen Sanitärartikels (U) mit mindestens einer Kamera (2), mindestens einem Prozessor (3) und einem Bildschirm (4), wobei
die Kamera (2) derart konfiguriert ist, dass die vorgegebene Einbausituation (E) mit dem bisherigen Sanitärartikel (E1) erfassbar ist;
der Prozessor derart konfiguriert ist, dass Bilddaten bereitstellbar sind, die die Einbausituation (E) darstellen,
der Bildschirm (4) derart konfiguriert ist, dass die Bilddaten als ein durch den Benutzer wahrnehmbares Bild (B) anzeigbar sind,
die Kamera (2) derart konfiguriert ist, dass wirkliche Abmessungen der Einbausituation (E) erfassbar sind; oder das Verfahren derart konfiguriert ist, dass wirkliche Abmessungen der Einbausituation (E) eingebbar sind,
die Datenbank derart konfiguriert ist, dass ein in einer Datenbank gespeicherter Ersatzsanitärartikels (U') aus der Datenbank auswählbar ist,
der ausgewählte Ersatzsanitärartikel (U') im besagten Bild (B) darstellbar ist, welche Darstellung den Ersatzsanitärartikel (U') auf die wirklichen Abmessungen der Einbausituation (E) im Wesentlichen massstabsgetreu skaliert, und
die Darstellung des Ersatzsanitärartikels (U') relativ zum Bild (B) der Einbausituation (E) verschiebbar ist, derart, dass die Passgenauigkeit zwischen der Einbausituation (E) und dem Ersatzsanitärartikel (U') überprüfbar ist.

15. Computerprogrammprodukt umfassend: ein computerlesbares Medium mit darin enthaltenen Computerprogrammcodemitteln zur Steuerung eines oder mehrerer Prozessoren eines Computers, welcher Computer mindestens eine Kamera (2), einen Prozessor (3) und einen Bildschirm (4) umfasst,
wobei das Computerprogrammcodemittel zur Ausübung eines Verfahren zur Bestimmung eines auf eine vorgegebene Einbausituation (E) passenden Ersatzsanitärartikels (U') für den Ersatz eines bisherigen Sanitärartikels (U) nach einem der Ansprüche 1 bis 13 ausgebildet sind.
